Europäisches Patentamt

European Patent Office

Office européen des brevets

(19)

(11) **EP 0 614 585 B1**

(12)

# EUROPEAN PATENT SPECIFICATION

(45) Date of publication and mention
of the grant of the patent:
**19.02.1997 Bulletin 1997/08**

(21) Application number: **92923269.2**

(22) Date of filing: **05.11.1992**

(51) Int Cl.$^6$: **H04L 12/56**, H04Q 11/04

(86) International application number:
**PCT/EP92/02565**

(87) International publication number:
**WO 93/11621 (10.06.1993 Gazette 1993/14)**

(54) **METHOD AND UNIT FOR THE RECONSTRUCTION OF THE CORRECT SEQUENCE OF ATM CELLS**

VERFAHREN UND VORRICHTUNG ZUR WIEDERHERSTELLUNG DER RICHTIGEN REIHENFOLGE VON ATM-ZELLEN

PROCEDE ET UNITE DE RECONSTITUTION DE LA SEQUENCE CORRECTE DE CELLULES DE DONNEES EN MODE DE TRANSFERT ASYNCHRONE

(84) Designated Contracting States:
**BE CH DE ES FR GB GR IT LI NL SE**

(30) Priority: **28.11.1991 IT MI913192**

(43) Date of publication of application:
**14.09.1994 Bulletin 1994/37**

(73) Proprietor: **ITALTEL SOCIETA ITALIANA TELECOMUNICAZIONI s.p.a.**
**20149 Milano (IT)**

(72) Inventor: **COLLIVIGNARELLI, Marco**
**I-28040 Dormelletto (IT)**

(74) Representative: **Giustini, Delio**
**c/o Italtel Società Italiana**
**Telecomunicazioni s.p.a.**
**P.O. Box 10**
**20019 Settimo Milanese (MI) (IT)**

(56) References cited:
**WO-A-91/02419          DE-A- 3 914 667**

- **PATENT ABSTRACTS OF JAPAN vol. 014, no. 380 (E-965) 16 August 1990 & JP,A,21 37 543**

## Description

Field of the Invention

This invention relates to a method and a unit for the reconstruction or resequencing of the initial order of the sequence of a cell flow in telecommunication systems using a special digital technique called ATM (Asynchronous Transfer Mode), for the transmission and/or switching of the vocal signals, video signals and data.

In the ATM technique the information relating to the various users and services are organized as time contiguous units with a fixed length of approx. 400 bits called cells. The cell bits are subdivided into a field containing the information to be exchanged (payload) and into a heading field (header) containing the information requested to route the cell through the switching network and other service information.

The ATM technique is considered as the more profitable solution for the multiplexing and switching into the evolution of the public communication networks towards the future wide band numerical network integrated in the services (B-ISDN), as this technique allows a very great flexibility compared to the previous systems.

On an ATM link, in the same time, a certain number of connections can be active; they are called virtual channels (VC) and virtual paths (VP). A virtual channel is a logic association between the end points of a link that enables the unidirectional transfer of cells over that link, while a virtual path is a logic association of virtual channels between the end points of a link that enables the unidirectional transfer of cells belonging to a set of virtual channels to take place over that link (CCITT Rec. I.113).

At the ATM level the integrity of the cell sequence inside every VC/VP has to be preserved, i. e. the AT network must be able to supply at the output the cells belonging to the same VC/VP in the same sequence order with which they are sent to the network.

The keeping of the sequencing order is automatically assured if all the cells in the same VC/VP follow the same path inside the ATM network.

However, in the ATM switching nodes to perform the switching operation it should be suitable to free ourselves of the need to make the cells of a same VC/VP pass through the same path.

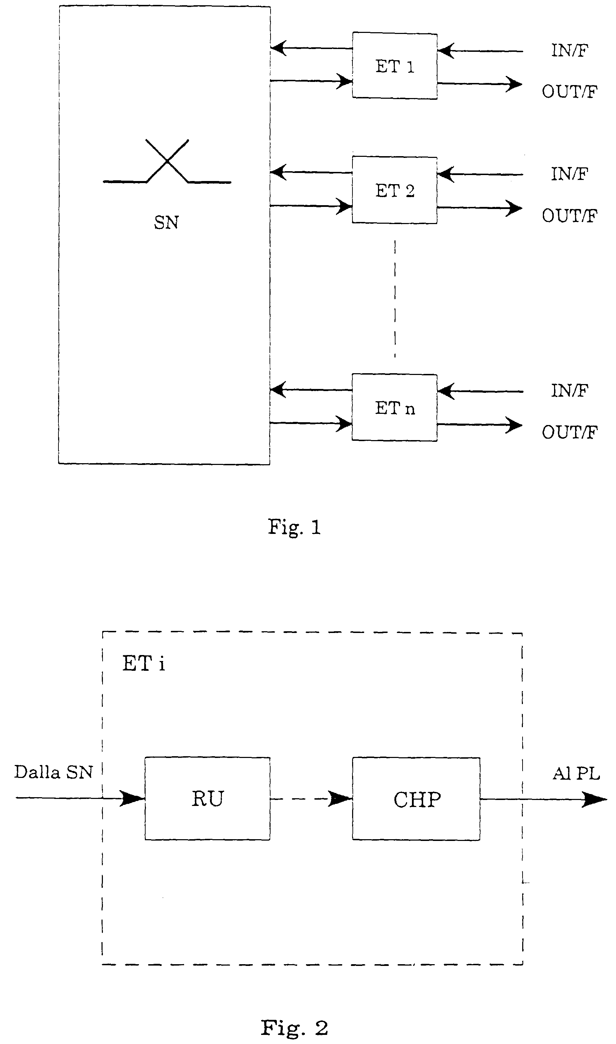

In particular, in the ATM technique, a switching node consists (Fig. 1) of a switching network (SN) and of a certain number of exchange terminations (ET) to which the ATM links are connected.

In the case under examination all the cells that belong to the same VC/VP are allowed to follow different paths inside the SN and as the cells suffer different delays following different paths inside the SN, as the latter introduces a variable delay, the cells of a same VC/VP may reach the output of the SN with a different order in respect with the one they had at the inlet. As the integrity of the sequence is no longer assured automatically, it is necessary to perform a resequencing operation of the initial sequence for each VC/VP, before sending the cells on the output link from the ATM node.

This operation, hereinafter referred to as "resequencing", is conceptually simple in that it consists in receiving an inlet disordered cell sequence and, on the base of an information contained in the header of the cell in the proprietary format internal to the node, to determine, for each VC/VP, the correct position of the cell in the output sequence so to supply the cells of each VC/VP in the same order they had entered the network.

The practical performing of the resequencing operation at ATM level is mainly complicated by the speeds involved and by the number of the virtual channels which may be activated at the same time on the same ATM link. In fact, this number may be very high (even two thousand and more on an ATM link -at about 150 Mbit/ s) and moreover each VC may need at least 24 bits to be completely identified (to this purpose, see the CCITT I.361 Recommendation). Therefore, the implementation of the resequencing operation based on VCI/VPI (VC/ VP identifier), in addition to be complex in itself, requires even the utilization of a considerable memory size.

Background Art

Within the ATM technique, it has been proposed to operate according to the maximum delay equalization: the sequencing order at the inlet of the network is then kept at the output if all the cells pass the same period of time inside the network, before entering the output link. To avoid with certainty a skip, before sending the cell to the output link, it is necessary to wait that, from the moment in which the cell enters the network, a period of time equal to the maximum delay introduced by that has elapsed.

In practice, it is sufficient to assure that the skips occur with a sufficiently low probability (for instance $10^{-10}$), comparable with the probability of other errors similar to a skip (for instance, wrong routing due to header transmission errors, etc.). Then, the value of $10^{-10}$ quantile of the maximum delay (DM) introduced by SN as a value of the time which must pass from the moment in which the cell enters the SN, before it is sent on the output link, may be used.

The resequencing operation shall then be based on the comparison between DM and the time actually elapsed by the cell inside the network, without that it was necessary to take into consideration the pertinent VC/ VP. The cell is then let to wait for the remaining time, given by the above mentioned comparison, so to emulate its exit from SN network after a period of time not less than DM. The time elapsed by the cell inside the SN network is obtained from the time stamp (TS) which is stored in the internal header of the cell when it is in the inlet ET, before its sending to SN network.

In principle, this solution is satisfactory, nevertheless in the practical implementation in the form of an integrated device, it involves some difficulties due to the fact that the structure becomes complex and involves significant memory sizes and often with "bulky" dimensions since they are not-standard.

The resequencing system disclosed in WO91/02419 is able to restore at an output of a switching network the sequence with which the cells were supplied to an input, and that are subjected to variable first time dalays, by subjecting the cells at the output to additional variable second time delays which are so chosen that for each cell the sum of the two time delays is substantially equal to a predetermined total value.

The system disclosed in the aforementioned application includes a (centralized) time stamp generator producing successive time stamp values, and providing a first time stamp value that is associated to each of the cells supplied on the input of the switching network. The resequencing unit coupled to an output of the switching network performs a comparison between the first time stamp value and a second time stamp value equal to the sum of the first time stamp value and the predetermined total value, the second value being provided by the same time stamp generator. The embodiments based on the time stamp comparison include structures dimensioned on the maximum extension of the time stamp value, so they are rather expensive in terms of the size of cell storage means and/or address memory. Alternative embodiments of the resequencing system, disclosed in the same application, include (centralized) means associated to the switching network to measure the first time delay for each of the cells at the output and to associate it to these cells as a first delay stamp value, which is contained in a field of the cell. It is worth noting that the preferred embodiment of the resequencing unit disclosed in the aforementioned application is particularly adapted to process variable length cells (that are built up as a continuous string of elementary subcells), and that it is never mentioned in that application the possibility to guarantee a high priority access to the output link of the resequencing unit. Finally, the queues of the addresses of each list belonging to subcells of cells having a same stamp value are organized as FIFOs. According to this approach the size of the address memory is not optimized due to the fact that it must store both the start-of-list pointer and the end-of-list pointer.

## Objects of the Invention

It is one of the objects of this invention, to realize a resequencing method and unit, that is able to efficiently perform the above mentioned operation, in terms of utilization of the memory in which the cells are stored, and of complexity of the control relating to the management of such memory for the performing of the resequencing operation.

## Disclosure of the Invention

This object is attained through the invention consisting of a method for the reconstruction of the initial order of the flow sequence of the cells pertaining to a same virtual circuit entering the switching network of an ATM telecommunication system, including the phases of:

- counter marking each cell entering the switching network with a temporal label and of storing the cell at the output of the switching network in a cell memory;
- determining the time elapsed by the single cells inside the switching network and of forming pre-setting queues for the output in each time slot of the output channel, with the cells for which a foreseen number of cell times has elapsed, between the moment of entering the network and the one foreseen for the transmission in the time slot;

such method being characterized by the phases of:

- forming a first list consisting of the values representing the cell memory locations, such list being addressed by three pointers, respectively a first pointer identifying the input time slot in which the cell is received, a second pointer identifying the output time slot for which the output of the received cell is foreseen and a third pointer, or virtual pointer, identifying the output time slot in which more than one cell should be supplied;
- forming a second list, such list being linked and addressed by values contained in the said first list, in which queues with some elements are formed, each of which addresses the cell in the previous position of the same queue;
- forming a third list consisting of the pointers pointing at the subsequent queues, comprehended between the first and the third pointer and active, i.e. containing at least one not empty element;
- transmitting, in a given output time slot, the last cell of the queue, if any, relating to the said time slot and in the subsequent time slots the other cells of the same queue in the reverse order in respect with the one according to which they have been introduced in the queue. Moreover, the invention consists of a unit for the reconstruction of the initial order of the flow sequence of the cells pertaining to the same virtual channel, entering the switching network of an ATM telecommunication system, such unit being positioned between the output of the switching network and a heading processor and including:
- an input block and an output block between which an intermediate storage is interposed and a controller connected to the said blocks and to the said intermediate storage which allows the transferring of the cells to the output after a minimum fixed time from the moment of the input of the cells in the said switching network. The said unit being characterized by the fact that the intermediate storage includes a cell memory in the locations of which the output cells from the switching network are stored and by the fact that the controller includes:

- a first storage containing the pointers at the locations of the said cell memory,
- a second storage in which queues with some elements are formed, each of which addresses the cell in the previous position of the same queue;
- a third storage containing the pointers that point at the queues containing at least one not empty element, consisting of the cells for which the said fixed minimum time period has already elapsed.

Further favourable characteristics will result from the depending claims.

The method and the unit according to the invention are therefore based on fixed length cells and comprise a shared queues approach, such queues being organized according to a LIFO discipline, the queue of the empty cell locations being stored in the same memory and fashion as the other queues, which can allow an optimization if compared with a FIFO approach. All the structures are dimensioned according to the difference between the maximum and the minimum crossing delay of the swithcing network, that is the maximum value of the residual waiting time in the resequencing buffer, in order to obtain more flexibility, and to achieve an optimization if compared with an engineerization based on the maximum time stamp value.

Brief Description of the Drawings

The invention will be described with reference to a preferred embodiment, without any restriction to it, which is shown with reference to the figures enclosed, where:

Figure 1, already mentioned, shows schematically the ATM switching network and the exchange terminations connected to it;
Figure 2 schematically shows the structure of an ETi exchange termination with a resequencing unit of the initial order of the cell sequence for each VC according to the invention;
Figure 3 shows the more detailed block diagram of the resequencing unit according to the invention;
Figure 4 shows a data structure used in an embodiment of the invention to perform the resequencing operation.

Description of a Preferred Embodiment

According to the invention a shared queues approach is used, so to obtain a significant saving in the dimensions of the storage which is sized on the base of the maximum number of cells actually present in the resequencing unit. With reference to Fig. 1, an ATM switching node includes a switching network (SN) to which several exchange terminations ET1, ET2,.... ETn are connected, that receive the flows of the input cells IN/F and emitting flows of output cells OUT/F, correctly routed in the SN network. These input and output flows may occur through an ATM link for instance with a capacity of about 150 Mbit/s. On this link a certain number of virtual channels (VC) and virtual paths (VP), may be active.

An ET structure, downstream side (i.e. after the SN network) is shown more in detail in Fig. 2. It includes a CHP (Cell Header Processor) block which receives the output cell flow from SN, processes the cells at ATM level and performs the translation of the cells from the proprietary format internal to the node to an ATM standard format, before these are passed to the physical level (PL) for the transmission on the output link.

Before the cells-reach the CHP, the resequencing operation is performed by a resequencing unit (RU) which is also present in the exchange termination, which has the specific duty to analyze a TS (Time Stamp) of the internal header of the cell and to make the cell wait for the time necessary to avoid skips among cells of a same VC, unless a sufficiently low probability exists, for instance equal to $10^{-10}$.

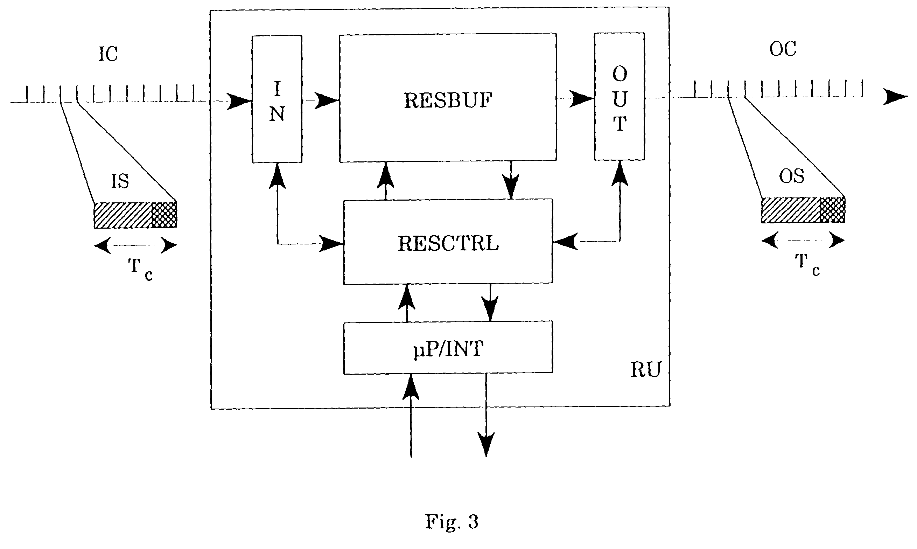

The block diagram of the resequencing unit RU is shown in Fig. 3. With reference to that figure, the behaviour of the unit in question may be summarized as follows: it receives a cell flow from the input channel IC, by means of an input block IN, and stores the data in a RESBUF buffer according to the indications of the RESCTRL controller. The RU unit, always according to the indications of the RESCTRL controller, draws from the RESBUF the cell to be transmitted, if any, so to supply a cell flow to the output channel OC, to which the RU unit is connected by means of the output block OUT. Moreover, by means of the mP/INT, the RU is able to carry on a dialogue with the microprocessor present on the ET for the necessary co-ordination.

The cells received and transmitted by the RU have a fixed length in the proprietary format internal to the node (for instance, 64 bytes) and the input IC and output OC channels are considered subdivided into temporal intervals having a width equal to the cell time Tc at the channel speed, indicated with IS and OS, respectively.

The resequencing unit RU performs the following operations:

- it receives the k-th cell occupying the i-th time slot of the input channels IC, indicated with IS(i);
- it determines the time (in units of cell times) which has elapsed from the moment in which the cell has entered the network, indicated with TD(k), according to the information contained in the internal header of the k-th cell (TS);
- it computes the difference between DM and TD(k), indicated with Z(k);

- it pre-sets the transmission of the k-th cell in the J-th time slot of the output channels OC, indicated with OS(j), where J = i + Z(k);
- if there is any cell which has to engage the output channel OC, in correspondence with OS(i), it transmits this latter output cell.

Some contention conditions of the OC may occur, in that it may happen that more than one cell has to enter the OC in the same temporal interval OS. The RU controls the contention conditions by putting the contending cells into queues.

During the receiving phase of the k-th cell, at the moment of the pre-setting or scheduling of the transmission in the OS(j), two situations might occur:

1. the OS(j) is free, that is, it has not been assigned to any cell; then, RU creates in RESBUF the queue associated to the OS(j), thus containing first only the cell just received;
2. the OS(j) has already been assigned to at least one cell, in general to m cells, for which a contention condition of the OS(j) exists: the RU places the k-th cell into the second one, or more generally, into the (m+1)-th position of the queue associated to the OS(j); with m the number of cells already present in the queue, the transmission of which has thus already been scheduled in the OS(j), has been indicated.

During the transmission phase, the RU enters the queue to be supplied during the transmission:

1. if the queue is empty, no cell is transmitted in correspondence with the actual OS, indicated with OS (i);
2. if at least one position of the queue is full, the cell present in the position to be supplied is transmitted in correspondence with the OS(i).

As only one cell may engage the contested OS temporal interval a situation in which one or more cells are transmitted in an OS following to the one for which their transmission was scheduled, arises.

The OS temporal interval actually engaged differs then from the one for which the cell transmission has been scheduled at the moment of its receiving by RU, and this not only if the OS temporal interval in question is under contention, but even if a contention condition arose in previous OSs and its effects have spread out up to the OS in question. Therefore, at the output of RU a residual delay jitter however exists, and then RU realize an equalization to the maximum delay unless a delay jitter due to the unavoidable contentions of the OSs does occur. The result of these contentions cannot be determined in advance, because it depends on the delays suffered by the cells in the switching network SN, therefore, in general, it is impossible to guarantee previously the engagement of certain OSs by the specified cells.

According to an embodiment of the invention, it is foreseen that some cells (or some services) may have a null delay jitter. To this purpose, in the RU the possibility to guarantee the engagement of the OS at a specified cell, and this for each OS temporal interval, so that a null delay jitter may result for the links those cell are pertaining to, has been introduced.

According to this embodiment, the RU manages a priority information (for instance, a bit or a word in a given field, associated with the TS), contained in the internal header and according to this information it organizes the cells into a high priority queue. Such queue provides a position in correspondence with each OS, in which a high priority cell (and only one) may be stored.

During the receiving phase if the cell is not a high priority one, the RU assigns the position in the queue as previously indicated; if, on the contrary, the cell requires a null delay jitter, the RU determines the OS value it has to engage and schedules its transmission by placing it in the high priority queue corresponding to that OS.

During the transmission, the RU verifies if a cell is present in the high priority queue, in correspondence with the actual OS, in which case it transmits the cell; if no cell exists in that position, the RU manages the queues of the cells which admit a not-null delay jitter, as previously indicated.

As the RU operation principle is based on the equalization at the maximum delay, the dimensioning of the whole data structure essentially depends on the difference between $10^{-10}$-quantile of the maximum delay (DM) and the SN network crossing minimum delay (Dm).

In practice, reference is made to $10^{-10}$-quantile of the variable component of the SN speed delay, called MJD (Maximum Jitters Delay):

$$MJD = (DM - Dm) \qquad (1)$$

expressed in number of cell times Tc or time slots.

The transmission speed of the input channels IC and the output channels OC are the same, therefore, a time slot can accept only one input cell and only one output cell can be transmitted from the RU if a cell exists that has passed a period of time equal to DM from the moment of its entering the network.

Except for the unavoidable contentions, a cell is transmitted on the OC at the latest after (DM - Dm) time slots from its entering the resequencing unit RU, but however, after (DM - Dm) time slots a position makes itself free inside the RU. If all the cells suffer a Dm delay in the SN network (empty network), in the RU the maximum number of accumulate cells is equal to :

$$(DM - Dm) \qquad (cells) \qquad (2)$$

apart from the number of queues present in the RU.

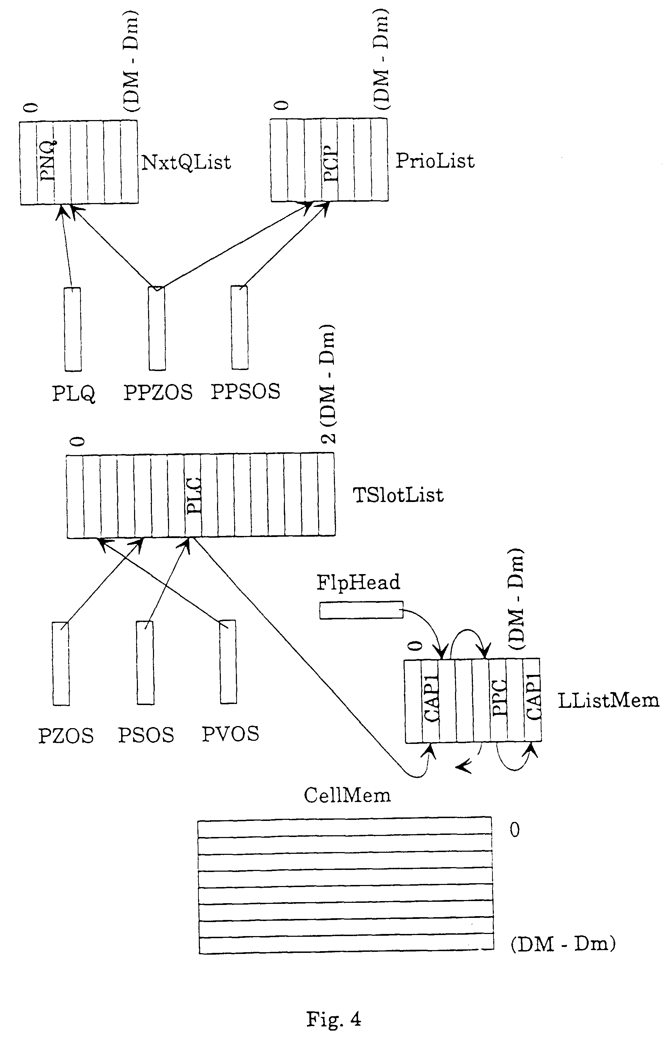

With reference to Fig. 4 now a preferred executive form of the invention is shown.

According to the invention, the pre-setting or scheduling of the transmission of the output cells from RU is obtained by managing the slot IS and OS by means of a list addressed by pointers.

A first pointer, called PZOS (Pointer Zero Output Slot) is used for the management of the global time, therefore it is increased at each cell time Tc. This pointer identifies the input slot IS in which the cell is received as well as the output slot OS, contemporaneous to it, so it corresponds to the index appearing in the previous relations. This pointer identifies inter alia the output slot OS for which is scheduled the transmission of the cells that no longer need to wait (a part from the contentions) before being transmitted on the output channel, because they have already passed DM cell times in the network (so having Z equal to zero) as well as because they have exhausted their remaining waiting period in the RU.

A second pointer, called PSOS (Pointer Scheduled Output Slot) is used during the receiving phase and identifies the OS for which the transmission of the cell actually receiving has been scheduled. PSOS then corresponds to the already mentioned j index and identifies the queue in which the receiving cell is inserted. PSOS may coincide with PZOS: this happens for the cells that have passed in the network a time equal to the maximum admittable (for which therefore the result is $Z = 0$).

If no OS contention would exist, the two pointer PZOS and PSOS will be enough to manage the events (receiving of one cell) on the input channel IC and (transmission of one cell) on the output channel OC; PZOS would identify the queue (or, better, the cell) supplied in the transmission and PSOS the one supplied in the receiving.

In order to manage the contentions a third pointer is provided, called PVOS (Pointer Virtual Output Slot) identifying the output slot OS which would be "virtually" engaged by all the cells contending for it, if their contemporaneous transmission to the contended OS were possible.

This pointer is used during the transmission phase to address the queue supplied in the transmission, and therefore, it is increased only when such queue is empty, so to address the following queue containing the cells to be transmitted; if no cell to be transmitted exists in the following OS, PVOS is set as PZOS.

Because of the restrictions to the dimensions of the pointers, the input slot IS and the output slot OS may only be addressed in a temporal window subdivided into slots having a Tc width, that has to be wide enough to allow the scheduling of the transmission of the cells placed at (DM - Dm) time slot from PZOS, without the occurring of any skip. At most, a queue can contain (DM - Dm) cells: this occurs when all the cells present in the RU have contemporaneously entered the SN network.

Then, at most PZOS and PVOS may differ for (DM - Dm) positions, and therefore, the number of the OS that may be addressed and, consequently, the size of the window has to be equal or greater than:

$$2 \cdot (DM - Dm) + 1 \qquad \text{(time slot)} \qquad (3)$$

The management of the time slots is implemented through the TSlotList (Time Slot List), appearing in Fig. 4, addressed by the PZOS, PSOS and PVOS pointers, which represents the part of the temporal axis to which the slots may be addressed. Each record of this list, that is, each location of the storage the list consists of, is then assimilable at a time slot, so that the number of the records of the TSlotList is defined by Eq.3.

As already said, the cells are stored in the RU until the time they passed in the SN network plus the one they passed in the RU is equal to DM and to solve the contention conditions on the OSs, the contending cells are organized in queues; so that they have, at most, some cells stored in:

- (DM - Dm) queues of 1 cell;
- a queue of (DM - Dm) cells;
- any intermediate situation whatsoever between the two extreme preceding situations.

With a conventional, separated queues type approach, to each OS output slot a queue should be associated, sized on the maximum number of cells it can contain. The number of the OS slots is equal to $2 \cdot (DM - Dm) + 1$ and each queue should contain up to (DM - Dm) cells, so that to store the cells in the RU by means of this kind of approach, an area should be reserved, equal to :

$$2 \cdot (DM - Dm)2 + (DM - Dm) \qquad \text{(cells)} \qquad (4)$$

However, the number of the queues contemporaneously active is equal to the number of OSs for which the transmission of at least one cell has been scheduled, so that, at most, you may have a maximum of (DM - Dm) queues (see relation 2).

But, according to the invention, in the RU a shared queues approach is used, so as to obtain a significant saving in the dimensions of the storage which is sized on the maximum number of the cells actually present in the RU.

The RU stores the cells into a CellMem (Cell Memory) associated to the RESBUF block of Fig. 3, which is shared among the various queues, the dimensions of which is then equal to:

$$(DM - Dm) + 1 \qquad \text{(cells)} \qquad (5)$$

and this because the memory in which the cells are stored is not traffic sized, so that the probability of an additional loss, due to a buffer overflow in the RU, is equal to zero. According to the invention, the elements of each queue are organized in stacks; in fact, the queues are supplied with LIFO approach (Last In First Out) in order to facilitate their management, as in this way it is sufficient to know the position of the last cell of the queue and the link to the cell engaging the precedent position, while a FIFO (First In First Out) management needs some information relating to the first as well as to the last cell of the queue.

To manage the queues, in each TSlotList record a pointer called PLC (Pointer Last Cell) which addresses the last cell of the queue is stored. An empty queue from a CAP1 value associated with PLC acting as terminator and indicating the end of the queue is identified. More generally, the queues of the lists are separated by empty elements consisting of terminators in the form of univocally recognizable codes.

The information necessary to manage the CellMem memory are stored in lists and to each active queue a list is associated. According to the invention a linked list architecture is used, so that even the memory reserved to the lists, called LListMem (Linked List Memory) is shared among the various queues and has the same depth of the CellMem, that is:

$$(DM - Dm) + 1 \qquad \text{(record)} \qquad (6)$$

This memory is used also to store the list of the free cells locations (Free Cell List) , the first of which is pointed by FlpHead (Free cell List Pointer Head), which is contained in a proper register.

To manage the stacks, with each element of the queue a pointer called PPC (Pointer Previous Cell) which addresses the cell to the preceding position of the same queue, is associated. The first cell of each queue is identified by a CAP1 value associated with a PPC acting as a terminator, as this cell is not preceded by any other cell.

In order to allow PVOS to address the queue to be supplied in correspondence with the next OS, once exhausted the actual queue, at each active queue comprehended between PVOS and PZOS, a pointer PNQ (Pointer Next Queue) pointing at the next active queue, is associated. If no active queue comprehended between PZOS and PVOS in addition to the one actually addressed by PVOS (that is, supplied in transmission) exists, then PNQ is equal to PZOS.

By means of PNQ, a linked list structure, in which the elements of each list consist of the queues "validated" by PZOS, where this term indicates the active queues (that is, the ones containing at least one cell) to which the cells that have exhausted their time in the RU pertain, is then implemented. In practice, the "validated" queues are all the active queues already addressed by PZOS and not yet by PVOS. The separating element among the queues has been indicated with CAP2 as; for addressing reasons, it consists of one bit more than the preceding separators.

In Fig. 4 the NxtQList (Next Queue List) memory block in which the list of the PNQ pointers to the queues to be supplied subsequently to the actual one (that is, pointed by PVOS) is stored, and the PLQ pointer (Pointer Last Queue) which addresses the last active queue which has been validated by PZOS, are shown.

As, at most (DM - Dm) queues there should be between PVOS and PZOS, the NxtQList has the same depth of LListMem, that is, (DM - Dm + 1) record.

The cells identified as high priority cells, which then require a null delay jitter, are stored into a separate queue, dedicated to them. To manage this queue, a list stored in the PrioList (Priority List) memory block appearing in Fig. 4, in which the addresses of the high priority cells PCP (Pointer Cell with Priority) are contained, is used. Since the priority cells contemporaneously present in the RU may be at most (DM - Dm), the PrioList foresees (DM - Dm + 1) positions.

The PrioList is addressed by two pointers PPZOS (Pointer Priority Zero Output Slot) and PPSOS (Pointer Priority Scheduled Output Slot), having the same meaning, for the high priority cells, of the PZOS and PSOS pointers, used for the low priority cells, but having a different size in that they must address a deep memory (DM - Dm + 1) instead of 2 (DM - Dm) + 1.

As the above mentioned validated queues may be at most (DM - Dm), these pointers may be advantageously used even to address the NxtQList.

The presence of the queue with high priority cells then involves an increase of the complexity of the RESCTRL block, but does not involve an increase of the dimensions of the Cellmem and then of the RESBUF, in that such cells share the same memory area with the low priority cells.

In the RU the possibility not to further delay, unless some contentions on the OSs are present, the cells pertaining to the flows that do not require to be reordered, in that they run a unique path inside the SN network and do not require the equalization at the maximum delay, has also been provided. At the moment of the receiving of the cell so identified by means of an information contained in the internal header, the RU fixes equal to DM the value of the delay suffered by the cell in the network, a part from the value of TS; in this way, the cell is placed in the queue pointed by PZOS and therefore it may be immediately transmitted at the output, if no cell exists to be transmitted, the transmission of which has been scheduled for preceding OSs and if no high priority cell exists which must engage the same OS.

**Claims**

1. Method for the reconstruction of the initial order (resequencing) of the sequence of a flow of cells pertaining to a same virtual channel (VC) or path (VP) entering a switching network of an ATM telecommunication system, consisting of the following phases :

- to counter mark each cell entering the switching network with a temporal stamp (TS) and to store the output cells of the switching network (SN) in a cell memory (CellMem);
- to determine the time elapsed by the single cells inside the switching network (SN) and to create pre-setting queues for the output in each time slot (OS(j)) of the output channel (OC), with the cells for which a fixed number of cell times between the moment of entering the network (SN) and the one foreseen for the transmission in the time slot (OS(j)) has elapsed;

such method being characterized by the following phases:

- to create a first list (TSlotList) consisting of the values (PLC) representing the cell memory (CellMem) locations, such list being addressed by three pointers, respectively, a first pointer (PZOS) identifying the input time slot (IS) in which a cell is received, a second pointer (PSOS) identifying the output time slot (OS) for which the output supplying of the cell received is foreseen, and a third pointer or virtual pointer (PVOS) identifying the output time slot (OS) in which more than one cell should be supplied;
- to create a second list (LListMem), such list being linked and addressed by the values contained in the first said list (TSlotList), in which some queues with some elements (PPC) are formed, each of which addresses the cell in the preceding position of the same queue;
- to create a third list (NxtQList) consisting of pointers (PNQ) that point at the next queues, comprehended between the said first (PZOS) and third (PVOS) pointer and active, that is, containing at least a not-empty element;
- to transmit, in a given output time slot (OS(j)), the last cell of the queue relating to the said time slot (OS(j)), if any, and in the next time slots the other cells of the same queue in the reverse order in respect with the one according to which they were entered in the queue.

2. Method according to claim 1, characterized by the fact that the length of the said first list (TSlotList) is equal to 2 (DM-Dm) +1, where DM and Dm are respectively the maximum and the minimum crossing delay of the switching network (SN).

3. Method according to claim 2, characterized by the fact that the Length of the said second (LListMem) and third (NxtQList) list is equal to (DM - Dm +1).

4. Method according to claim 2 or 3, characterized by the fact that the queues of the said second (LListMem) and third (NxtQList) list are separated by empty elements consisting of terminators in the form of univocally recognizable codes (CAP1, CAP2).

5. Method according to claim 4, characterized by the fact to form an additional priority list (PrioList) for the managing of the cells qualified as high priority ones, consisting of (DM - Dm +1) positions and addressed by two additional pointers (PPZOS, PPSOS) identifying respectively the input time slot (IS) in which a cell is received and the output time slot (OS) for which the output supplying of the high priority cell is foreseen and by the fact that for each time slot (OS(j)) the high priority cell is transmitted, unless the corresponding element of the priority list (PrioList) is empty.

6. Method according to claim 5, characterized by the fact to foresee an additional pointer(PLQ) associated to the said third list (NxtQList) that addresses the last active queue which has been validated by the said first pointer (PZOS).

7. Unit for the resequencing of a flow of cells pertaining to a same virtual channel (VC) or path (VP), entering a switching network (SN) of an ATM telecommunication system, such unit being positioned between the output of the switching network (SN) and a heading processor (CHP) and including:

- an input block (IN) and an output block (OUT) between which an intermediate storage (RESBUF) is interposed and a controller connected to the said blocks (IN, OUT) and to the said intermediate storage (RESBUF) which allows the transferring of the cells to the output after a minimum fixed time from the moment of the input of the cells in the said switching network (SN);

the said unit being characterized by the fact that the intermediate storage (RESBUF) includes a cell memory (CellMem) in the locations of which the output cells from the switching network (SN) are stored and by the fact that the controller (RESCTRL) includes:

- a first storage (TSlotList) containing pointers (PLC) at the locations of the said cell memory (CellMem),
- a second storage (LListMem) in which queues with some elements are formed, each of which addresses the cell in the previous position of the same queue;

- a third storage (NxtQList) containing pointers (PNQ) that point at the queues containing at least one not empty element, consisting of the cells for which the said fixed minimum time period has already elapsed.

8. Unit according to claim 7, characterized by the fact to comprehend three registers containing the same number of pointers, respectively, the first pointer (? ZOS) identifying the input time slot (IS) in which a cell is received, a second pointer (PSOS) identifying the output time slot (OS) for which the output of the received cell is foreseen and a third pointer or virtual pointer (PVOS) identifying the output time slot (OS) in which more than one cell should be supplied.

9. Unit according to claim 7, characterized by the fact that the locations of the said second storage (LListMem) are addressed by the pointers (PLC) contained in the said first storage (TSlotList), and the same pointers (PLC) are used to address the said cell memory (CellMem).

10. Unit according to claim 7, characterized by the fact that the lengths of the said second (LListMem) and third (NxtQList) storage are equal to (DM-Dm+1), where, (DM-Dm) is the maximum floating delay with which the cells may present themselves at the output of the switching network (SN).

11. Unit according to claim 10, characterized by the fact that the said maximum floating delay (DM-Dm) is fixed equal to $10^{-10}$ quantile of the variable component of the said delay.

12. Unit according to any claim from 7 to 11, characterized by the fact to comprehend an additional storage (PrioList) to manage the cells qualified as high priority cells, such memory having a length equal to (DM-Dm+1).

13. Unit according to any claim from 7 to 11, characterized by the fact to comprehend an additional register containing a pointer (FlpHead) indicating the first free location of the cell in the said cell memory (CellMem) and the corresponding location of the said second storage (LListMem).

## Patentansprüche

1. Verfahren zur Wiederherstellung der ursprünglichen Anordnung der Sequenzen eines Flusses von Zellen, die zum selben virtuellen Kanal (VC) oder zur selben virtuellen Bahn (VP) gehören und die in ein Vermittlungsnetz eines ATM Telekommunikations-systems eintreten, wobei das Verfahren folgende Phasen umfaßt:

- Markierung jeder einzelnen in das Durchschaltnetzwerk eintretenden Zelle durch eine zeitliche Prägung (TS) und Speicherung der Ausgangszellen des Durchschaltnetzwerks (SN) in einem Zellspeicher (CellMem);
- Bestimmung der von den einzelnen Zellen innerhalb des Durchschaltnetzes verbrachten Zeit und Schaffung von vorbestimmenden Warteschlangen für den Ausgang in jedem Zeitkanal (OS(j)) des Ausgangskanals (OC), mit den Zellen, für die eine feste Anzahl von Zellzeiten zwischen dem Zeitpunkt des Eintritts in das Netzwerk (SN) und dem für die Übertragung in den Zeitkanal (OS(j)) vorgesehenen verstrichen ist;

wobei diese Methode durch die folgenden Phasen gekennzeichnet wird:

- Bildung einer ersten Liste (TSlotList), die aus Werten (PLC) besteht, welche die Zellspreicherpositionen darstellen, wobei die genannte Liste durch drei Zeiger adressiert wird, und zwar in dieser Reihenfolge: ein erster Zeiger (PZOS), der den Eingangszeitkanal (IS) identifiziert, in dem eine Zelle empfangen wird, ein zweiter Zeiger (PSOS), der den Ausgangszeitkanal (OS) identifiziert, für den die Ausgangsübertragung der empfangenen Zelle vorgesehen ist, und ein dritter Zeiger oder virtueller Zeiger (PVOS), der den Ausgangszeitkanal (OS) identifiziert, in dem mehr als eine Zelle übertragen werden sollen;
- Bildung einer zweiten Liste (LListMem), wobei diese Liste durch die in der genannten ersten Liste (TSlotList) enthaltenen Werte verbunden und adressiert wird, in der Warteschlangen mit Elementen (PPC) gebildet werden, von denen jedes die Zelle in der voraufgehenden Position der selben Warteschlange adressiert;
- Bildung einer dritten Liste (NxtQList), die aus Zeigern (PNQ) besteht, die sich auf die folgenden Warteschlangen richten, welche zwischen dem genannten ersten (PZOS) und dem dritten (PVOS) Zeiger enthalten und aktiv sind, d.h., daß sie mindestens ein nicht leeres Element enthalten;
- Übertragung in einen vorgegebenen Ausgangszeitkanal (OS(j)) der letzten Zelle der zum genannten Zeitkanal (OS(j)) gehörigen Warteschlange, so weit vorhanden, und Übertragung in die folgenden Zeitkanäle der anderen zur gleichen Warteschlange gehörigen Zellen in umgekehrter Anordnung im Vergleich zu der, mit der sie in die Warteschlange eingetreten sind.

2. Verfahren entsprechend Anspruch 1, dadurch gekennzeichnet, daß die Länge der genannten ersten Liste (TSlotList) gleich 2 (DM-Dm) + 1 ist, wobei DM und Dm die maximale beziehungsweise minimale Durchlaufverzögerung des Durchschaltnetzwerkes sind.

3. Verfahren entsprechend Anspruch 2, dadurch gekennzeichnet, daß die Länge der genannten zweiten (LListMem) und dritten (NxtQList) Liste gleich (DM - Dm + 1) ist.

4. Verfahren entsprechen Anspruch 2 oder 3, dadurch gekennzeichnet, daß die Warteschlangen der genannten zweiten (LListMem) und dritten (NxtQList) Liste durch leere Elemente getrennt werden, welche aus Terminatoren in Form von eindeutig erkenntlichen Codes (CAP1, CAP2) bestehen.

5. Verfahren nach Anspruch 4, dadurch gekennzeichnet, daß eine weitere Prioritätenliste (PrioList) gebildet wird zur Verwaltung der als besonders bevorzugt qualifizierten Zellen, wobei diese Liste aus (DM - Dm + 1) Positionen besteht und von zwei zusätzlichen Zeigern (PPZOS, PPSOS) adressiert wird, die den Eingangszeitkanal (IS), in dem eine Zelle empfangen wird, beziehungsweise den Ausgangszeitkanal (OS), für den die Ausgangsübertragung der Hochprioritätenzelle vorgesehen ist, bestimmen,und dadurch, das für jeden Zeitkanal (OS (j)) die Hochprioritätenzelle übertragen wird, bis das entsprechende Element der Proritätenliste (PrioList) leer ist.

6. Verfahren nach Anspruch 5, dadurch gekennzeichnet, daß ein zusätzlicher Zeiger (PLQ) vorgesehen ist, der der genannten dritten Liste (NxtQList) zugeordnet ist, die die letzte aktive Warteliste adressiert, welche durch den genannten ersten Zeiger (PZOS) gültig gemacht worden ist.

7. Einheit zur Wiedereinordnung eines Flusses von Zellen, die zu einem selben virtuellen Kanal (VC) oder virtuellen Bahn gehören und die in ein Durchschaltnetzwerk (SN) eines ATM Telekommunikationssystem eingehen, wobei diese Einheit zwischen dem Ausgang des Durchschaltnetzwerkes (SN) und einem Kopfprozessor (CHP) plaziert wird und folgendes einschließt:

- einen Eingangsblock (IN) und einen Ausgangsblock (OUT), zwischen die ein Zwischenspeicher (RESBUF) geschaltet ist, und einen mit beiden Blöcken (IN, OUT) und dem genannten Zwischenspeicher (RESBUF) verbundenen Regler, der den Transfer von Zellen zum Ausgang nach einer vorgegebenen Minimalzeit vom Augenblick des Eintritts der Zelle in das genannte Durchschaltnetzwerk (SN) ermöglicht;

wobei die genannte Einheit dadurch gekennzeichnet wird, daß der Zwischenschalter (RESBUF) einen Zellspeicher (CellMem) einschließt, in dessen Speicherstellen die Ausgangs zellen vom Durchschaltnetzwerk (SN) gespeichert werden, und durch die Tatsache, daß der Regler (RESCTRL) folgendes einschließt:

- einen ersten Speicher (TSlotList), der Zeiger (PLC) an den Speicherstellen des genannten Zellspeichers (CellMem) enthält;
- einen zweiten Speicher (LListMem), in dem Warteschlangen mit Elementen gebildet werden, wobei jedes Element die Zelle in der voraufgehenden Position der selben Warteschlange adressiert;
- einen dritten Speicher (NxtQList), der Zeiger (PNQ) enthält, die auf die Warteschlangen ausgerichtet sind, die mindestens ein nicht leeres Element enthalten, das aus den Zellen besteht, für die die genannte festgelegte minimale Zeitperiode schon abgelaufen ist.

8. Einheit nach Anspruch 7, dadurch gekennzeichnet, daß sie drei Register, die die gleiche Anzahl Zeiger enthalten, und zwar in dieser Reihenfolge: der erste Zeiger (PZOS),der den Eingangszeitkanal (IS) identifiziert, in dem eine Zelle empfangen wird, einen zweiten Zeiger (PSOS), der den Ausgangszeitkanal (OS) identifiziert, für den der Ausgang der empfangenen Zelle vorgesehen ist, und einen dritten Zeiger oder virtuellen Zeiger (PVOS), der den Ausgangszeitkanal (OS) identifiziert, in den mehr als eine Zelle übertragen werden sollen.

9. Einheit nach Anspruch 7, dadurch gekennzeichnet, daß die Speicherstellen des genannten zweiten Speichers (LListMem) durch die gleichen im genannten ersten Speicher (TSlotList) enthaltenen Zeiger (PLC) adressiert werden, und die selben Zeiger (PLC) werden benutzt um den genannten Zellspeicher (CellMem) zu adressieren.

10. Einheit nach Anspruch 7, dadurch gekennzeichnet, daß die Längen des genannten zweiten (LListMem) und dritten (NxtQList) Speichers gleich (DM-Dm+1) sind, wobei (DM-Dm) die veränderliche Verzögerung ist, mit der die Zellen sich am Ausgang des Durchschaltnetzwerkes (SN) präsentieren können.

11. Einheit nach Anspruch 10, dadurch gekennzeichnet, daß die genannte veränderliche Verzögerung (DM-Dm) gleich $10^{-10}$ Quantil der variablen Komponente der genannten Verzögerung festgelegt ist.

12. Einheit nach jedem der Ansprüche von 7 bis 11, dadurch gekennzeichnet, daß sie einen zusätzlichen Speicher (PrioList) einschließt, um die als Hochprioritätszellen qualifizierten Zellen zu verwalten, wobei dieser Speicher eine Länge gleich (DM-Dm+1) hat.

13. Einheit nach jedem der Ansprüche von 7 bis 11, dadurch gekennzeichnet, daß sie ein zusätzliches Register einschließt, das einen Zeiger (FlpHead) enthält, der die erste freie Speicherstelle im genannten Zellspeicher (CellMem) und die entsprechende Speicherstelle des genannten zweiten Speichers (LListMem) anzeigt.

## Revendications

1. Méthode pour la reconstruction de l'ordre original de la séquence d'un flux de cellules appartenantes au même canal virtuel (VC) ou parcours virtuel (VP), et qui entrent dans un réseau de commutation d'un système de télécommunication ATM, et cette méthode comprend les phases suivantes:

   - contremarquer chaque cellule, qui entre le réseau de connexion avec une étiquette de temps (TS) et mémoriser les cellules de sortie du réseau de connexion (SN) dans une mémoire de cellules (CellMem);
   - définir le temps passé par les cellules individuelles à l'intérieur du réseau de connexion (SN) et créer des files d'attente présélectionnées pour la sortie dans chacun des time slots (OS(j)) du canal de sortie (OC), avec les cellules pour lesquelles un nombre fixe de temps de cellules est passé entre le moment d'entrer le réseau (SN) et celui prévu pour la transmission dans le time slot (OS(j));

   le dit méthode étant caractérisé par les phases suivantes:

   - créer une première liste (TSlotList) constituée des valeurs (PLC), qui représentent les locations de mémoire de cellule (CellMem), la dite liste étant adressée par trois pointeurs (indicateurs), respectivement un premier pointeur (PZOS) identifiant le time slot d'entrée (IS), dans lequel une cellule est reçue, un deuxième pointeur (PSOS) identifiant le time slot de sortie (OS), pour lequel est prévue l'émission en sortie de la cellule reçue et un troisième pointeur ou pointeur virtuel (PVOS), qui identifie le time slot de sortie (OS), dans lequel devrait être émis plus d'une cellule;
   - créer une deuxième liste (LListMem), la dite liste étant connectée et adressée par les valeurs contenues dans la dite première liste (TSlot-

List), dans laquelle des files d'attente avec des éléments (PPC) sont formées, chacun desquels adresse la cellule dans la position précédente de la même file d'attente;

   - créer une troisième liste (NxtQList) constituée par les pointeurs (PNQ), qui pointent aux files d'attente successives comprises entre le dit premier (PZOS) et troisième (PVOS) pointeur, et actives, c'est à dire qu'elles contiennent au moins un élément non vide;
   - transmettre dans un time slot de sortie donné (OS(j)) la dernière cellule de la file d'attente relative au dit time slot (OS(j)), et dans les time slots successifs les autres cellules de la même file d'attente dans l'ordre opposé comparé à celui selon lequel elles sont entrées dans la file.

2. Méthode selon la revendication 1, caractérisé en ce que la longueur de la dite première liste (TSlotList) est égale a 2 (DM-Dm) + 1, où DM et Dm sont respectivement le délai de passage maximum et minimum du réseau de connexion (SN).

3. Méthode selon la revendication 2, caractérisé en ce que la longueur de la dite deuxième (LListMem) et troisième (NxtQList) liste est égale à (DM-Dm + 1).

4. Méthode selon la revendication 2 ou 3, caractérisée en ce que les files d'attente de la dite deuxième (LListMem) et troisième (NxtQList) liste sont séparées par des éléments vides constitués par des terminateurs en forme de codes reconnaissables de façon univoque (CAP1, CAP2).

5. Méthode selon la revendication 4, caractérisée par le fait de former une ultérieure liste de priorité (PrioList) pour gérer des cellules qualifiées comme cellules à haute priorité, qui consistent en (DM-Dm+1) positions et adressées par deux pointeurs additionnels (PPZOS, PPSOS), qui identifient respectivement le time slot d'entrée (IS), dans lequel une cellule est reçue, et le time slot de sortie (OS), pour lequel l'émission de sortie de la cellule à haute priorité est prévue, et par le fait que pour chaque time slot (OS(j)) la cellule à haute priorité est transmise, jusqu'à ce que l'élément correspondant de la liste de priorité (PrioList) soit vide.

6. Méthode selon la revendication 5, caractérisée en ce qu'elle prévoit un pointeur ultérieur (PLQ) associé à la dite troisième liste (NxtQList), qui adresse la dernière file d'attente active, qui a été validée par le dit premier pointeur (PZOS).

7. Unité pour la reconstruction de l'ordre d'un flux de cellules appartenantes à un même canal virtuel (VC) ou parcours virtuel (VP), qui entre dans un réseau de connexion (SN) d'un système de télécommunications du type ATM, la dite unité étant positionnée entre la sortie du réseau de connexion (SN) et un processeur de tête (CHP) et comprenant:

- un bloc d'entrée (IN) et un bloc de sortie (OUT) entre lesquels une mémoire intermédiaire (RESBUF) est interposée et un contrôleur relié aux dits blocs (IN, OUT) et à la dite mémoire intermédiaire (RESBUF), qui permet le transfert de cellules à la sortie après un temps minimum fixé du moment de l'entrée des cellules dans le dît réseau de connexion (SN);

la dite unité étant caractérisée en ce que la mémoire intermédiaire (RESBUF) comprend une mémoire de cellules (CellMem), dans les locations de laquelle les cellules en sortie du réseau de connexion (SN) sont mémorisées, et par le fait que le contrôleur comprend:

- une première mémoire (TSlotList), qui contient des pointeurs (PLC) aux locations de la dite mémoire de cellule (CellMem);
- une deuxième mémoire (LListMem), dans laquelle des files d'attente avec des éléments sont formées, chacun desquels adresse la cellule dans la position précédente de la même file d'attente;
- une troisième mémoire (NxtQList), qui contient les pointeurs (PNQ), qui pointent à des files, qui contiennent au moins un élément non vide et qui sont formées par les cellules, pour lesquelles le dît temps minimum préétabli est déjà passé.

8. Unité selon la revendication 8, caractérisée en ce qu'elle comprend trois registres contenants le même nombre de pointeurs, respectivement le premier pointeur (PZOS) identifiant le time slot d'entrée (IS), dans lequel une cellule est reçue, un deuxième pointeur (PSOS) identifiant le time slot de sortie (OS) pour lequel l'émission de la cellule reçue est prévue, et un troisième pointeur ou pointeur virtuel (PVOS) identifiant le time slot de sortie (OS), dans lequel plus d'une cellule devrait être émise.

9. Unité selon la revendication 7, caractérisée en ce que les locations de la dite deuxième mémoire (LListMem) sont adressées par les pointeurs (PLC) contenus dans la dite première mémoire (TSlot-List), et les même pointeurs (PLC) sont utilisés pour adresser la dite mémoire de cellules (CellMem).

10. Unité selon la revendication 7, caractérisée en ce que les longueurs de la dite deuxième (LListMem) et troisième mémoire ((NxtQList) sont égales à (DM-Dm+1), où (DM-Dm) est le retard fluctuant maximum avec lequel les cellules se peuvent présenter à la sortie du réseau de connexion (SN).

11. Unité selon la revendication 10, caractérisée en ce que le dît retard fluctuant maximum (DM-Dm) est fixé égal à $10^{-10}$ quantile de l'élément variable du dit retard.

12. Unité selon n'importe laquelle des revendications de 7 à 11, caractérisée en ce qu'elle comprend une ultérieure mémoire (PrioList) pour gérer les cellules qualifiées comme cellules de priorité, et cette mémoire a une longueur égale à (DM-Dm+1).

13. Unité selon n'importe laquelle des revendications de 7 à 11, caractérisée en ce qu'elle comprend un ultérieur registre contenant un pointeur (FlpHead) indiquant la première location libre de la cellule dans la dite mémoire de cellule (CellMem) et la location correspondante de la dite deuxième mémoire (LListMem).

Fig. 1

Fig. 2

Fig. 3

Fig. 4